# EUROPÄISCHE PATENTSCHRIFT

(11) **EP 1 197 117 B1**
(45) Veröffentlichungstag und Bekanntmachung des Hinweises auf die Patenterteilung: **19.01.2005**
(21) Anmeldenummer: 99928995.2
(22) Anmeldetag: 21.07.1999
(51) Int. Cl.: H04Q 7/38

(54) **VERFAHREN UND GEEIGNETE VORRICHTUNGEN, UM DEN SICHERHEITSGRAD VON KRYPTOGRAPHIEFUNKTIONEN ZU SETZEN**
METHOD AND ASSOCIATED DEVICES FOR SETTING THE SECURITY LEVEL OF CRYPTOGRAPHIC FUNCTIONS
PROCEDE ET DISPOSITIFS ADAPTES DESTINES A DEFINIR LE NIVEAU DE SECURITE DE FONCTIONS CRYPTOGRAPHIQUES

(43) Veröffentlichungstag der Anmeldung: 17.04.2002
(73) Patentinhaber: Swisscom Mobile AG, 3050 Bern (CH)
(72) Erfinder: HUBER, Adriano, CH-6600 Locarno (CH)
(74) Vertreter: Vogel, Dany
(86) Internationale Anmeldenummer: PCT/CH1999/000336
(87) Internationale Veröffentlichungsnummer: WO 2001/008435

(56) Entgegenhaltungen:
- EP-A- 0 779 760
- WO-A-99/09765
- PATENT ABSTRACTS OF JAPAN vol. 1998, no. 14, 31. Dezember 1998 (1998-12-31) -& JP 10 247936 A (MATSUSHITA ELECTRIC IND CO LTD), 14. September 1998 (1998-09-14)

## Beschreibung

Die vorliegende Erfindung betrifft ein Verfahren und geeignete Vorrichtungen, um den Sicherheitsgrad von Kryptographiefunktionen zu setzen. Insbesondere betrifft die vorliegende Erfindung ein Verfahren und geeignete Vorrichtungen, um den Sicherheitsgrad von in Kommunikationsendgeräten verwendeten Kryptographiefunktionen zu setzen.

Um vertrauliche Daten bei der Übertragung über Telekommunikationsnetze, insbesondere bei der Übertragung über Mobilfunknetze, vor dem Zugriff durch unberechtigte Drittparteien zu schützen ist es heutzutage allgemein üblich, Kryptographieverfahren einzusetzen, mittels welchen die vertraulichen Daten vor der Übertragung über das Telekommunikationsnetz beim Sender verschlüsselt und nach der Übertragung über das Telekommunikationsnetz beim Empfänger entschlüsselt werden. Verschiedene Kryptographieverfahren weisen unterschiedliche Sicherheitsgrade auf, die von Sicherheitsparametern, wie den verwendeten Kryptographiealgorithmen und den darin verwendeten kryptographischen Schlüsseln, insbesondere der Bitlänge der darin verwendeten Schlüssel, abhängen. Die Anwender der Kryptographieverfahren, beispielsweise Dienstleister wie Finanzinstitute oder Dienstleistungsnehmer wie Bankkunden, wünschen im Allgemeinen einen hohen Sicherheitsgrad. Allerdings gebieten nationale Interessen von gewissen Ländern, in denen beispielsweise betreffende kryptographische Produkte hergestellt werden und/oder in denen Eigentümer von entsprechenden Schutzrechten beheimatet sind, die Verbreitung von Kryptographieprodukten, beispielsweise ab gewissen vordefinierten Sicherheitsgraden oder unter Verwendung von gewissen vordefinierten Sicherheitsparametern, über die Landesgrenzen hinweg oder zumindest in gewisse definierte Länder zu unterbinden. Für die Hersteller von solchen Kryptographieprodukten, die in ihrem eigenen wirtschaftlichen Interesse ihre Produkte möglichst weltweit vermarkten möchten, die aber den nationalen Vorschriften und gesetzlichen Bestimmungen unterliegen, stellt sich nun das Problem, wie sie ihre eigenen Interessen unter Einhaltung der nationalen Bestimmungen möglichst effizient verfolgen können. Die Herstellung, Verwaltung und Wartung von verschiedenen Kryptographieprodukten für verschiedene Märkte erweist sich dabei als keine optimale Lösung, da die Produkteversionen und insbesondere auch Kombinationen mit anderen Produkten, in welche die Kryptographieprodukte integriert werden, viel zu zahlreich sind und einen unwirtschaftlichen Mehraufwand mit sich bringen. In alternativen Lösungen wird zwar das gleiche Produkt überallhin ausgeliefert, aber gewisse Teile, die den national auferlegten Restriktionsbestimmungen unterliegen, werden vor der Produktauslieferung durch Schalter deaktiviert, beispielsweise mittels softwaremässigen Schaltern, die durch Setzen von sogenannten Flags ein- respektive ausgeschaltet werden. Das Problem dieser alternativen Lösung besteht darin, dass diese Schalter oft auch durch Drittparteien verändert werden können, beispielsweise durch sogenannte Programmpatches, die die erwähnten Flags manipulieren können.

In der Patentanmeldung EP 779 760 A1 wird ein Verfahren beschrieben, um in einer Mobilstation dem betreffenden Benutzer anzuzeigen, ob die Datenübertragung zwischen der Mobilstation und dem Mobilkommunikationssystem verschlüsselt wird oder nicht. Um dies zu erreichen werden gemäss der Lehre von EP 779 760 A1 die zwischen der Mobilstation und dem Mobilkommunikationssystem ausgetauschten Signale überwacht, und auf der Basis der überwachten Signale dem Benutzer angezeigt, ob die ausgetauschten Daten verschlüsselt sind oder nicht, beispielsweise indem dem Benutzer für den verschlüsselten Modus und den unverschlüsselten Modus verschiedene akustische Signale wiedergegeben werden. In Übereinstimmung mit den GSM-Normen (Global System for Mobile Communication) wird der Verschlüsselungsmodus gemäss EP 779 760 A1 durch Einheiten im Mobilkommunikationssystem mittels sogenannten "cipher mode command" Meldungen in den verschlüsselten Modus, respektive in den unverschlüsselten Modus gesetzt. Gemäss der Lehre von EP 779 760 A1 kann der aktuelle Verschlüsselungsmodus beispielsweise durch den Zentralprozessor der Mobilstation in einem dafür vorgesehenen Anzeigedatenfeld angegeben werden, das beispielsweise ein einziges Informationsbit umfasst.

Es ist eine Aufgabe dieser Erfindung, ein neues und besseres Verfahren sowie dafür geeignete Vorrichtungen vorzuschlagen, weiche es ermöglichen, den Sicherheitsgrad von in Kommunikationsendgeräten verwendeten Kryptographiefunktionen, insbesondere situationsabhängig, zu setzen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass in einem Kommunikationsendgerät, welches über Telekommunikationsnetze kommuniziert, situationsanzeigende Parameter von einer sicheren Quelle, die beispielsweise mittels einem digitalen Zertifikat als sichere Quelle authentifiziert wird, gesichert über das Telekommunikationsnetz entgegengenommen werden, beispielsweise direkt, ohne Beeinflussungsmöglichkeiten durch andere Elemente, aus einem chiffrierten Datenobjekt mit zertifiziertem Schlüssel oder als nicht beeinflussbarer Bestandteil des im betreffenden Telekommunikationsnetz verwendeten Protokolls, und dass im Kommunikatronsendgerät basierend auf entgegengenommenen situationsanzeigenden Parametern Sicherheitsparameter, zum Beispiel die maximal zulässige Länge von kryptographischen Schlüsseln oder zugelassene kryptographische Algorithmen, bestimmt werden, welche Sicherheitsparameter von Kryptographiefunktionen verwendet werden und den Sicherheitsgrad bestimmen. Der Vorteil dieses Verfahrens besteht darin, dass der Sicherheitsgrad von im Kommunikationsendgerät verwendeten Kryptographiefunktionen, respektive von diesen Kryptographiefunktionen verwendete Sicherheitsparameter, situationsabhängig und dynamisch gesetzt werden kann/können, so dass keine unterschiedlichen Kryptographieprodukte in verschiedene Zielmärkte geliefert werden müssen und vom Hersteller keine Schalter statisch gesetzt werden müssen, deren Wirkung durch ein einmaliges Überschreiben rückgängig gemacht werden kann.

In einer Ausführungsvariante enthalten mindestens gewisse situationsanzeigende Parameter dienstspezifische Angaben, beispielsweise Angaben betreffend den Typ des betreffenden Dienstes, die von einem Dienstserver, beispielsweise ein E-Mail-Server oder ein File-Transfer-Server, von welchem das genannte Kommunikationsendgerät Dienste bezieht, gesichert, beispielsweise verschlüsselt und/oder als Bestandteil eines digitalen, chiffrierten Datenobjekts mit zertifiziertem Schlüssel, über das Telekommunikationsnetz an das Kommunikationsendgerät übertragen werden. Der Vorteil, dienstspezifische Angaben bei der Festlegung des Sicherheitsgrades von Kryptographiefunktionen zu berücksichtigen besteht darin, dass verschiedene Sicherheitsgrade für unterschiedliche Dienste, beispielsweise höhere Sicherheitsgrade für Finanzdienste als für E-Mail-Dienste, für verschiedene Ebenen von Diensten, beispielsweise unterschiedliche Sicherheitsgrade auf der Transportebene und auf der Applikationsebene, und für verschiedene Anwendungen von Diensten, beispielsweise unterschiedliche Sicherheitsgrade für File-Transfer in einer Finanzanwendung (Finanzdienst) als in einer Datenbankanwendung (Datendienst) vorgeschrieben und gesetzt werden können.

In einer Ausführungsvariante enthalten mindestens gewisse situationsanzeigende Parameter Angaben über den zulässigen Sicherheitsgrad, beispielsweise gemäss einer international vereinbarten Norm oder zulässige Sicherheitsparameter, beispielsweise Angaben über spezifische zugelassene kryptographische Algorithmen, die von einem Dienstserver, von welchem das Kommunikationsendgerät Dienste bezieht, gesichert, beispielsweise verschlüsselt und/oder als Bestandteil eines digitalen, chiffrierten Datenobjekts mit zertifiziertem Schlüssel, über das Telekommunikationsnetz an das Kommunikationsendgerät übertragen werden.

In einer Ausführungsvariante sind mindestens gewisse der Kommunikationsendgeräte Mobilfunkgeräte, beispielsweise Mobilfunktelefone oder kommunikationsfähige Lap- oder Palmtop-Computer für GSM- (Global System for Mobile Communication), UMTS- (Universal Mobile Telephone System), oder andere, beispielsweise satellitenbasierte, Mobilfunknetze und mindestens gewisse situationsanzeigende Parameter enthalten einen Ländercode, der von einem Mobilfunknetz, in welchem das Mobilfunkgerät roamt, an das Mobilfunkgerät übertragen wird. Die Anwendung des erfindungsgemässen Verfahrens in Mobilgeräten, insbesondere unter Verwendung von Ländercodes als situationsanzeigende Parameter, hat den Vorteil, dass der Sicherheitsgrad der verwendeten Kryptographiefunktionen dynamisch an die in einem betreffenden Aufenthaltsland geltenden Restriktionen betreffend zulässiger maximalen Sicherheitsgrade angepasst werden können.

An dieser Stelle soll erwähnt werden, dass sich die vorliegende Erfindung neben dem erfindungsgemässen Verfahren auch auf ein erfindungsgemässes Kommunikationsendgerät, insbesondere auf ein mobiles Kommunikationsendgerät, beispielsweise ein Mobilfunktelefon oder ein kommunikationsfähiger Lap- oder Palmtop-Computer für GSM-, UMTS- oder andere, beispielsweise satellitenbasierte, Mobilfunknetze, auf eine erfindungsgemässe Chipkarte, beispielsweise eine SIM-Karte (Subscriber Identification Module), die in einem Kommunikationsendgerät eingesetzt werden kann, sowie auf einen erfindungsgemässen Computer-lesbaren Datenträger und auf ein erfindungsgemässes Computerprogrammelement bezieht.

Nachfolgend wird eine Ausführung der vorliegenden Erfindung anhand eines Beispieles beschrieben. Das Beispiel der Ausführung wird durch folgende einzige beigelegte Figur illustriert:

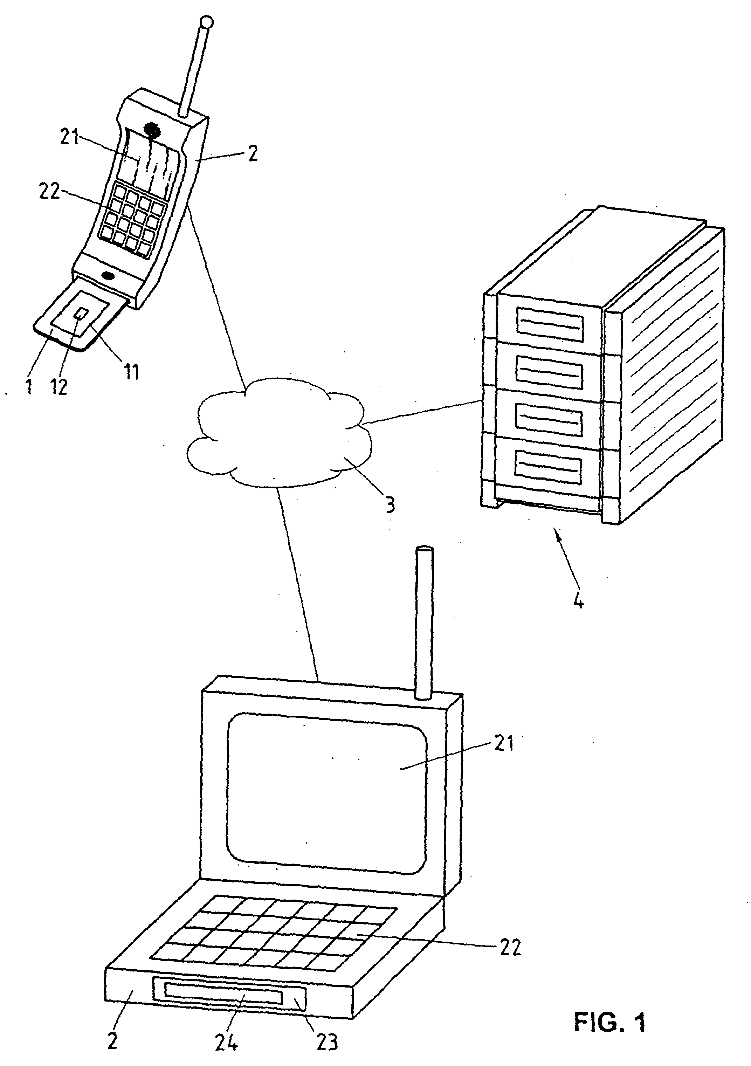

Figur 1 zeigt ein Blockdiagramm mit einer schematischen Darstellung eines ersten Mobilfunkgeräts mit einer Chipkarte, eines zweiten Mobilfunkgeräts sowie eines Dienstservers, die mit einem Mobilfunknetz verbunden sind.

In der Figur 1 bezieht sich die Bezugsziffer 3 auf ein Telekommunikationsnetz, insbesondere ein Mobilfunknetz 3, beispielsweise ein GSM-, UMTS, oder ein anderes, zum Beispiel ein satellitenbasiertes, Mobilfunknetz 3, über welches Kommunikationsendgeräte 2, insbesondere Mobilfunkgeräte 2, miteinander oder mit Dienstservern 4, beispielsweise ein File-Transfer-Server, ein Finanzserver, ein Datenbankserver, oder ein E-Mail-Server, kommunizieren, das heisst insbesondere auch Daten austauschen, können.

Die Mobilfunkgeräte 2 umfassen ein erfindungsgemässes Sicherheitsgradbestimmungsmodul 12, 24, welches vorzugsweise ein programmiertes Softwaremodul ist, das sich in einem geeigneten, von Benutzern nicht manipulierbaren Speicher im Mobilfunkgerät 2 oder auf einer mit dem Mobilfunkgerät 2 verbundenen Chipkarte 1 befindet. Das Sicherheitsgradbestimmungsmodul 12, 24 ist beispielsweise Bestandteil von Kryptographiefunktionen 11, 23, die in den Mobilfunkgeräten 2 verwendet werden. Funktionen des Sicherheitsgradbestimmungsmoduls 12, 24 werden in einem Prozessor im Mobilfunkgerät 2 oder auf der mit dem Mobilfunkgerät 2 verbundenen Chipkarte 1 ausgeführt.

Die Hauptfunktion des Sicherheitsgradbestimmungsmoduls 12, 24 besteht darin, den Sicherheitsgrad der im Mobilfunkgerät 2 verwendeten Kryptographiefunktionen 11, 23, respektive von diesen Kryptographiefunktionen 11, 23 verwendete Sicherheitsparameter situationsabhängig zu setzen. Die aktuelle Situation wird dabei von sogenannten situationsanzeigenden Parametern bestimmt, welche vom Sicherheitsgradbestimmungsmodul 12, 24 von sicheren Quellen gesichert entgegengenommen werden.

Als situationsanzeigende Parameter gelten beispielsweise das betreffende Land, in welchem das Mobilfunkgerät 2 betrieben wird, oder dienstspezifische Angaben, beispielsweise der betreffende Dienst oder Diensttyp eines Dienstservers 4, welcher vom Mobilfunkgerät 2 benutzt wird, oder Angaben betreffend Protokolle, respektive Protokollebenen, die von diesem Dienst verwendet werden oder andere Angaben über den betreffenden Dienst, respektive Angaben darüber, wie ein bestimmter Dienst, respektive eine verfügbare Funktion, angewendet wird, beispielsweise kann für die Verwendung von File-Transfer-Funktionen in einer Finanzanwendung (Finanzdienst) ein höherer Sicherheitsgrad zulässig sein als für deren Verwendung in einer Datenbankanwendung (Datendienst). Es ist auch möglich, dass die situationsanzeigenden Parameter direkte und spezifische Angaben betreffend den zu verwendenden Sicherheitsparametern oder des maximal zulässigen und/oder zu verwendenden Sicherheitsgrades enthalten, wobei Angaben betreffend den Sicherheitsgrad vorzugsweise auf einer internationalen Norm beruhen.

Als Sicherheitsparameter gelten beispielsweise die (Bit-) Länge von verwendeten kryptographischen Schlüsseln oder die Benennung von spezifischen zu verwendenden kryptographischen Algorithmen aus einer Reihe von möglichen alternativen Algorithmen.

Eine Quelle von situationsanzeigenden Parametern, beispielsweise der Dienstserver 4, kann beispielsweise dann als sicher akzeptiert werden, wenn von ihr ein digitales (signiertes) Zertifikat erhalten wird, welches die Quelle authentifiziert. Die Netzwerkinfrastruktur des Mobilfunknetzes 3 kann in dem Sinne als sichere Quelle betrachtet werden, als nicht beeinflussbare Bestandteile des im Mobilfunknetz 3 verwendeten Protokolls als situationsanzeigende Parameter verwendet werden.

Situationsanzeigende Parameter werden in dem Sinne gesichert über das Telekommunikationsnetz entgegengenommen, als sie direkt, ohne Beeinflussungsmöglichkeiten durch andere Elemente, beispielsweise aus einem digitalen, chiffrierten Datenobjekt mit zertifiziertem Schlüssel oder als nicht beeinflussbarer Bestandteil aus Protokolldateneinheiten des im betreffenden Mobilfunknetz 3 verwendeten Protokolls entnommen werden.

Zur Umsetzung von entgegengenommenen situationsanzeigenden Parametern in zu verwendende Sicherheitsparameter verfügt das Sicherheitsgradbestimmungsmodul 12, 24 beispielsweise über entsprechende, vom Benutzer nicht manipulierbare Tabellen oder entsprechende Programminstruktionen, mittels welchen den aktuellen entgegengenommenen situationsanzeigenden Parametern entsprechende Sicherheitsparameter zugeordnet werden. Da sich die zulässigen Sicherheitsgrade, respektive Sicherheitsparameter, insbesondere in verschiedenen Ländern im Laufe der Zeit ändern können, ist es möglich, diese Tabellen, respektive diese Programminstruktionen, unter Zuhilfenahme von sicheren kryptographischen Funktionen in einem zuständigen Dienstleistungszentrum oder über das Mobilfunknetz 3 zu aktualisieren.

Situationsanzeigende Parameter werden vom Sicherheitsgradbestimmungsmodul 12, 24 beispielsweise dadurch erfasst, dass über das Mobilfunknetz 3 empfangene Protokolldateneinheiten darauf überprüft werden, ob sie einen neuen Ländercode enthalten (MCC, Mobile Country Code), oder dass über das Mobilfunknetz 3 empfangene, chiffrierte Datenobjekte mit zertifiziertem Schlüssel (digitale Zertifikate) darauf geprüft werden, ob sie situationsanzeigende Parameter enthalten, zum Beispiel dienstspezifische Angaben wie beispielsweise eine Angabe betreffend den aktuellen Diensttyp, zum Beispiel E-Mail oder File-Transfer, oder betreffend die Anwendung eines Dienstes, beispielsweise die Verwendung von File-Transfer in einer Finanzanwendung (Finanzdienst) oder in einer Datenbankanwendung (Datendienst). Der Fachmann wird verstehen, dass es auch möglich ist, für die Bestimmung von situationsanzeigenden Parametern, respektive für die Bestimmung von Sicherheitsgraden und/oder den zu verwendenden Sicherheitsparametern spezielle Protokolle zu definieren, die zwischen Kommunikationsendgeräten 2, insbesondere den darin enthaltenen Sicherheitsgradbestimmungsmodul 12, 24 und Dienstservern 4 eingesetzt werden können.

Es soll hier auch erwähnt werden, dass situationsanzeigende Parameter und die Differenzierung der zu verwendenden Sicherheitsgrade, respektive Sicherheitsparameter, auch individuelle Protokollebenen betreffen können, beispielsweise Protokollebenen gemäss dem siebenschichtigen OSI-Referenzmodell (Open Systems Interconnection) der ISO (International Standards Organisation), so dass beispielsweise für die Applikationsebene (OSI-Schicht 7) und die Transportebene (OSI-Schicht 4) verschiedene Restriktionen betreffend zulässige Sicherheitsgrade anwendbar sind. Es sollte auch erwähnt werden, dass typischerweise mehrere situationsanzeigende Parameter kombiniert werden, so dass beispielsweise im Land "X" und im Land "Y" die gleichen Restriktionen auf der Transportebene gelten können, aber für das Land "X" strengere Restriktionen auf der Applikationsebene gelten als für das Land "Y".

Änderungen des Sicherheitsgrades der im Mobilfunkgerät 2 verwendeten Kryptographiefunktionen 11, 23, respektive von diesen Kryptographiefunktionen 11, 23 verwendeten Sicherheitsparametern, können dem Benutzer, beispielsweise durch programmierte Funktionen des Sicherheitsgradbestimmungsmoduls 12, 24, mittels der Anzeige 21 mitgeteilt werden. Es ist auch möglich, dass sich der Benutzer des Mobilfunkgeräts 2 selber über aktuelle Sicherheitsgrade, respektive momentan verwendete Sicherheitsparameter, informieren kann, indem er beispielsweise entsprechende programmierte Funktionen des Sicherheitsgradbestimmungsmoduls 12, 24 aktiviert, zum Beispiel mittels der Bedienungselemente 22 des Mobilfunkgeräts 2.

Neben den eingangs erwähnten Vorteilen für die Hersteller von Produkten mit kryptographischen Funktionen (11, 23) ergeben sich auch Möglichkeiten, die vorliegende Erfindung wirtschaftlich direkt zu vermarkten. Zum Beispiel können Kommunikationsendgeräte und/oder Chipkarten hergestellt und verkauft werden, die ein erfindungsgemässes Sicherheitsgradbestimmungsmodul umfassen. Es ist auch möglich Computer-lesbare Datenträger herzustellen und zu verkaufen, oder unter Lizenzgebühren abzugeben, welche Datenträger codierte Daten enthalten, die ein Computer-Programm repräsentieren, welches Computer-Programm ermöglicht, einen Prozessor, insbesondere in einem Kommunikationsendgerät, so zu steuern, dass er den Sicherheitsgrad von verwendeten Kryptographiefunktionen (11, 23), respektive von diesen Kryptographiefunktionen (11, 23) verwendete Sicherheitsparameter, gemäss dem beschriebenen Verfahren situationsabhängig setzt. Computerprogrammelemente, die Computerprogrammcodemittel umfassen, um einen Prozessor, insbesondere in einem Kommunikationsendgerät, so zu steuern, dass er den Sicherheitsgrad von verwendeten Kryptographiefunktionen (11, 23), respektive von diesen Kryptographiefunktionen (1, 23) verwendete Sicherheitsparameter, gemäss dem beschriebenen Verfahren situationsabhängig setzt, können gegen Bezahlung von Lizenzgebühren an Dritte abgegeben werden, welche diese Computerprogrammelemente in verschiedenste Vorrichtungen integrieren können.

## Patentansprüche

1. Verfahren zum situationsabhängigen Setzen des Sicherheitsgrads von Kryptographiefunktionen (11, 23), die in Kommunikationsendgeräten (2) verwendet werden, welche Kommunilcationsendgeräte (2) über Telekommunikationsnetze (3) kommunizieren, in welchem Verfahren in einem genannten Kommunikationsendgerät (2) situationsanzeigende Parameter von einer sicheren Quelle (3, 4) gesichert über das Telekommunikationsnetz (3) entgegengenommen werden, **dadurch gekennzeichnet,**
**dass** im genannten Kommunikationsendgerät (2) basierend auf aktuellen entgegengenommenen situationsanzeigenden Parametern Sicherheitsparameter bestimmt werden, welche Sicherheitsparameter im Kommunikationsendgerät (2) den betreffenden situationsanzeigenden Parametern zugeordnet sind, und welche Sicherheitsparameter die Länge von kryptographischen Schlüsseln und/oder die Benennung von kryptographischen Algorithmen umfassen, die von den genannten Kryptographiefunktionen (11, 23) verwendet werden und die die Höhe des Sicherheitsgrads dieser genannten Kryptographiefunktionen (11, 23) bestimmen.

2. Verfahren gemäss Anspruch 1, **dadurch gekennzeichnet, dass** mindestens gewisse genannte situationsanzeigende Parameter dienstspezifische Angaben enthalten, die von einem Dienstserver (4), von welchem das genannte Kommunikationsendgerät (2) Dienste bezieht, gesichert über das Telekommunikationsnetz (3) an das genannte Kommunikationsendgerät (2) übertragen werden.

3. Verfahren gemäss einem der Ansprüche 1 oder 2, **dadurch gekennzeichnet, dass** mindestens gewisse genannte situationsanzeigende Parameter Angaben über den zulässigen Sicherheitsgrad oder zulässige Sicherheitsparameter enthalten, die von einem Dienstserver (4), von welchem das genannte Kommunikationsendgerät (2) Dienste bezieht, gesichert über das Telekommunikationsnetz (3) an das genannte Kommunikationsendgerät (2) übertragen werden.

4. Verfahren gemäss einem der Ansprüche 1 bis 3, **dadurch gekennzeichnet, dass** mindestens gewisse genannte Kommunikationsendgeräte (2) Mobilfunkgeräte sind, und dass mindestens gewisse genannte situationsanzeigende Parameter einen Ländercode enthalten, der von einem Mobilfunknetz (3), in welchem das genannte Mobilfunkgerät (2) roamt, an das genannte Mobilfunkgerät (2) übertragen wird.

5. Kommunikationsendgerät (2), das über ein Telekommunikationsnetz (3) kommuniziert, welches Kommunikationsendgerät (2) ein Sicherheitsgradbestimmungsmodul (12, 24) umfasst, um den Sicherheitsgrad von Kryptographiefunktionen (11, 23), die im Kommunikationsendgerät (2) verwendet werden, situationsabhängig zu setzen, welches Sicherheitsgradbestimmungsmodul (12, 24) situationsanzeigende Parameter von einer sicheren Quelle (3, 4) gesichert über das Telekommunikationsnetz (3) entgegennimmt, **dadurch gekennzeichnet,**
**dass** das Sicherheitsgradbestimmungsmodul (12, 24) Tabellen oder entsprechende Programminstruktionen umfasst, mittels welchen den aktuellen entgegengenommenen situationsanzeigenden Parametern entsprechende Sicherheitsparameter zugeordnet werden, welche Sicherheitsparameter die Länge von kryptographischen Schlüsseln und/oder die Benennung von kryptographischen Algorithmen umfassen, die von den genannten Kryptographiefunktionen (11, 23) verwendet werden und die die Höhe des Sicherheitsgrads dieser genannten Kryptographiefunktionen (11, 23) bestimmen.

6. Chipkarte (1), die entfernbar mit einem Kommunikationsendgerät (2) verbindbar ist, welches Kommunikationsendgerät (2) über ein Telekommunikationsnetz (3) kommuniziert, welche Chipkarte (1) ein Sicherheitsgradbestimmungsmodul (12) umfasst, um den Sicherheitsgrad von im Kommunikationsendgerät (2) verwendeten Kryptographiefunktionen (11) situationsabhängig zu setzen, welches Sicherheitsgradbestimmungsmodul (12) situationsanzeigende Parameter von einer sicheren Quelle (3, 4) gesichert über das Telekommunikationsnetz (3) entgegennimmt, **dadurch gekennzeichnet,**
**dass** das Sicherheitsgradbestimmungsmodul (12, 24) Tabellen oder entsprechende Programminstruktionen umfasst, mittels welchen den aktuellen entgegengenommenen situationsanzeigenden Parametern entsprechende Sicherheitsparameter zugeordnet werden, welche Sicherheitsparameter die Länge von kryptographischen Schlüsseln und/oder die Benennung von kryptographischen Algorithmen umfassen, die von den genannten Kryptographiefunktionen (11, 23) verwendet werden und die die Höhe des Sicherheitsgrads dieser genannten Kryptographiefunktionen (11, 23) bestimmen.

7. Computer-lesbarer Datenträger, der codierte Daten enthält, die ein Computer-Programm repräsentieren, welches Computer-Programm ermöglicht, einen Prozessor in einem Kommunikationsendgerät (2), welches Kommunikationsendgerät (2) über ein Telekommunikationsnetz (3) kommuniziert, so zu steuern, dass er den Sicherheitsgrad von im Kommunikationsendgerät (2) verwendeten Kryptographiefunktionen (11, 23) situationsabhängig setzt, wobei er situationsanzeigende Parameter von einer sicheren Quelle (3, 4) gesichert über das Telekommunikationsnetz (3) entgegennimmt, **dadurch gekennzeichnet,**
**dass** das Computer-Programm Tabellen oder entsprechende Programminstruktionen umfasst, mittels welchen den aktuellen entgegengenommenen situationsanzeigenden Parametern entsprechende Sicherheitsparameter zugeordnet werden, welche Sicherheitsparameter die Länge von kryptographischen Schlüsseln und/oder die Benennung von kryptographischen Algorithmen umfassen, die von den genannten Kryptographiefunktionen (11; 23) verwendet werden und die die Höhe des Sicherheitsgrads dieser genannten Kryptographiefunktionen (11, 23) bestimmen.

8. Computerprogrammelement umfassend: Computerprogrammcodemittel, um einen Prozessor in einem Kommunikationsendgerät (2), welches Kommunikationsendgerät (2) über ein Telekommunikationsnetz (3) kommuniziert, so zu steuern, dass er den Sicherheitsgrad von im Kommunikationsendgerät (2) verwendeten Kryptographiefunktionen (11, 23) situationsabhängig setzt, wobei er situationsanzeigende Parameter von einer sicheren Quelle (3, 4) gesichert über das Telekommunikationsnetz (3) entgegennimmt, **dadurch gekennzeichnet,**
**dass** das Computer-Programm Tabellen oder entsprechende Programminstruktionen umfasst, mittels welchen den aktuellen entgegengenommenen situationsanzeigenden Parametern entsprechende Sicherheitsparameter zugeordnet werden, welche Sicherheitsparameter die Länge von kryptographischen Schlüsseln und/oder die Benennung von kryptographischen Algorithmen umfassen, die von den genannten Kryptographiefunktionen (11, 23) verwendet werden und die die Höhe des Sicherheitsgrads dieser genannten Kryptographiefunktionen (11, 23) bestimmen.

## Claims

1. A method for setting in a situation-dependent way the degree of security of cryptography functions (11, 23) which are used in communication terminals (2), which communication terminals (2) communicate via telecommunication networks (3), in which method situation-indicating parameters are received in a said communication terminal (2) over the telecommunication network (3) from a secure source (3, 4), wherein
based on current received situation-indicating parameters, security parameters are determined in the said communication terminal (2), which security parameters are associated in the communications terminal (2) with the respective situation-indicating parameters, and which security parameters include the length of cryptographic keys and/or the designation of cryptographic algorithms which are used by the said cryptography functions (11, 23) and which determine the height of the degree of security of these said cryptography functions (11, 23).

2. The method according to claim 1, wherein at least certain said situation-indicating parameters contain service-specific data which are transmitted in a secure way over the telecommunication network (3) to the said communication terminal (2) by a service server (4) from which the said communication terminal (2) obtains services.

3. The method according to one of the claims 1 or 2, wherein at least certain said situation-indicating parameters contain data about the permissible degree of security or permissible security parameters which are transmitted in a secure way over the telecommunication network (3) to the said communication terminal (2) by a service server (4) from which the said communication terminal (2) obtains services.

4. The method according to one of the claims 1 to 3, wherein at least certain said communication terminals (2) are mobile radio devices, and at least certain said situation-indicating parameters contain a country code which is transmitted to the said mobile radio device (2) by a mobile radio network (3) in which the said mobile radio device (2) is roaming.

5. A communication terminal (2) which communicates via a telecommunication network (3), which communication terminal (2) includes a degree-of-security-determining module (12, 24) in order to set in a situation-dependent way the degree of security of cryptography functions (11, 23) which are used in the communication terminal (2), which degree-of-security-determining module (12, 24) receives situation-indicating parameters from a secure source (3, 4) in a secure way over the telecommunication network (3), wherein
the degree-of-security-determining module (12, 24) includes tables or corresponding program instructions by means of which corresponding security parameters are associated with the current received situation-indicating parameters, which security parameters include the length of cryptographic keys and/or the designation of cryptographic algorithms which are used by the said cryptography functions (11, 23) and which determine the height of the degree of security of these said cryptography functions (11, 23).

6. A chipcard (1) which is removably connectible to the communication terminal (2), which communication terminal (2) communicates via a telecommunication network (3), which chipcard (1) includes a degree-of-security-determining module (12) in order to set in a situation-dependent way the degree of security of cryptography functions (11) used in the communication terminal (2), which degree-of-security-determining module (12) receives situation-indicating parameters in a secure way over the telecommunication network (3) from a secure source (3, 4), wherein
the degree-of-security-determining module (12) includes tables or corresponding program instructions by means of which corresponding security parameters are associated with the current received situation-indicating parameters, which security parameters include the length of cryptographic keys and/or the designation of cryptographic algorithms which are used by the said cryptography functions (11, 23) and which determine the height of the degree of security of these said cryptography functions (11, 23).

7. A computer-readable data carrier containing coded data representing a computer program, which computer program makes it possible to control a processor in a communication terminal (2), which communication terminal (2) communicates over a telecommunication network (3), such that it sets in a situation-dependent way the degree of security of cryptography functions (11, 23) used in the communication terminal (2), whereby it receives situation-indicating parameters over the telecommunication network (3) from a secure source (3, 4) in a secure way, wherein
the computer program includes tables or corresponding instructions by means of which corresponding security parameters are associated with the current received situation-indicating parameters, which security parameters include the length of cryptographic keys and/or the designation of cryptographic algorithms which are used by the said cryptography functions (11, 23) and which determine the height of the degree of security of these said cryptography functions (11, 23).

8. A computer program element having: computer program code means in order to control a processor in a communication terminal (2), which communication terminal (2) communicates via a telecommunication network (3), such that the processor sets in a situation-dependent way the degree of security of cryptography functions (11, 23) used in the communication terminal (2), whereby it receives situation-indicating parameters over the telecommunication network (3) from a secure source (3, 4) in a secure way, wherein
the computer program includes tables or corresponding program instructions by means of which corresponding security parameters are associated with the current received situation-indicating parameters, which security parameters include the length of cryptographic keys and/or the designation of cryptographic algorithms, which are used by the said cryptography functions (11, 23) and which determine the height of the degree of security of these said cryptography functions (11, 23).

## Revendications

1. Procédé pour définir en fonction de la situation le degré de sécurité de fonctions de cryptographie (11, 23) qui sont utilisées dans des terminaux de communication (2), lesquels terminaux de communication (2) communiquent par le biais de réseaux de télécommunication (3), procédé dans lequel des paramètres indiquant la situation sont pris en compte de manière sécurisée dans un dit terminal de communication (2) par le biais du réseau de télécommunication (3) depuis une source sécurisée (3, 4), **caractérisé en ce que** des paramètres de sécurité sont déterminés dans ledit terminal de communication (2) en se basant sur les paramètres indiquant la situation actuellement pris en compte, lesquels paramètres de sécurité sont associés dans le terminal de communication (2) aux paramètres indiquant la situation concernés, et lesquels paramètres de sécurité comprennent la longueur des clés cryptographiques et/ou la désignation des algorithmes cryptographiques qui seront utilisés par lesdites fonctions de cryptographie (11, 23) et qui déterminent le niveau du degré de sécurité de ces dites fonctions de cryptographie (11, 23).

2. Procédé selon la revendication 1, **caractérisé en ce qu'**au moins certains desdits paramètres indiquant la situation contiennent des indications spécifiques au service qui sont transmises de manière sécurisée audit terminal de communication (2) par le biais du réseau de télécommunication (3) par un serveur de service (4) duquel ledit terminal de communication (2) reçoit des services.

3. Procédé selon l'une des revendication 1 ou 2, **caractérisé en ce qu'**au moins certains desdits paramètres indiquant la situation contiennent des indications sur le degré de sécurité autorisé ou des paramètres de sécurité autorisés qui sont transmis de manière sécurisée audit terminal de communication (2) par le biais du réseau de télécommunication (3) par un serveur de service (4) duquel ledit terminal de communication (2) reçoit des services.

4. Procédé selon l'une des revendication 1 à 3, **caractérisé en ce qu'**au moins certains desdits terminaux de communication (2) sont des appareils de radiocommunication mobiles et qu'au moins certains desdits paramètres indiquant la situation contiennent un code de pays qui est transmis audit appareil de radiocommunication mobile (2) par un réseau de radiocommunication mobile (3) dans lequel ledit appareil de radiocommunication mobile (2) est en itinérance.

5. Terminal de communication (2) qui communique par le biais d'un réseau de télécommunication (3), lequel terminal de communication (2) comprend un module de détermination du degré de sécurité (12, 24) afin de définir en fonction de la situation le degré de sécurité de fonctions de cryptographie (11, 23) qui sont utilisées dans le terminal de communication (2), lequel module de détermination du degré de sécurité (12, 24) prend en compte de manière sécurisée par le biais du réseau de télécommunication (3) des paramètres indiquant la situation provenant d'une source sécurisée (3, 4), **caractérisé en ce que** le module de détermination du degré de sécurité (12, 24) comprend des tableaux ou des instructions de programme correspondantes à l'aide desquels sont affectés les paramètres de sécurité correspondant aux paramètres indiquant la situation actuellement pris en compte, lesquels paramètres de sécurité comprennent la longueur des clés cryptographiques et/ou la désignation des algorithmes cryptographiques qui seront utilisés par lesdites fonctions de cryptographie (11, 23) et qui déterminent le niveau du degré de sécurité de ces dites fonctions de cryptographie (11, 23).

6. Carte à puce (1) qui peut être connectée de manière amovible à un terminal de communication (2), lequel terminal de communication (2) communique par le biais d'un réseau de télécommunication (3), laquelle carte à puce (1) comprend un module de détermination du degré de sécurité (12) afin de définir en fonction de la situation le degré de sécurité de fonctions de cryptographie (11) qui sont utilisées dans le terminal de communication (2), lequel module de détermination du degré de sécurité (12) prend en compte de manière sécurisée par le biais du réseau de télécommunication (3) des paramètres indiquant la situation provenant d'une source sécurisée (3, 4), **caractérisé en ce que** le module de détermination du degré de sécurité (12, 24) comprend des tableaux ou des instructions de programme correspondantes à l'aide desquels sont affectés les paramètres de sécurité correspondant aux paramètres indiquant la situation actuellement pris en compte, lesquels paramètres de sécurité comprennent la longueur des clés cryptographiques et/ou la désignation des algorithmes cryptographiques qui seront utilisés par lesdites fonctions de cryptographie (11, 23) et qui déterminent le niveau du degré de sécurité de ces dites fonctions de cryptographie (11, 23).

7. Support de données lisible par ordinateur qui contient des données codées qui représentent un programme informatique, lequel programme informatique permet de commander un processeur dans un terminal de communication (2), lequel terminal de communication (2) communique par le biais d'un réseau de télécommunication (3), de telle sorte qu'il définit en fonction de la situation le degré de sécurité de fonctions de cryptographie (11, 23) qui sont utilisées dans le terminal de communication (2) en prenant ici en compte de manière sécurisée par le biais du réseau de télécommunication (3) des paramètres indiquant la situation provenant d'une source sécurisée (3, 4), **caractérisé en ce que** le programme informatique comprend des tableaux ou des instructions de programme correspondantes à l'aide desquels sont affectés les paramètres de sécurité correspondant aux paramètres indiquant la situation actuellement pris en compte, lesquels paramètres de sécurité comprennent la longueur des clés cryptographiques et/ou la désignation des algorithmes cryptographiques qui seront utilisés par lesdites fonctions de cryptographie (11, 23) et qui déterminent le niveau du degré de sécurité de ces dites fonctions de cryptographie (11, 23).

8. Élément de programme informatique comprenant : des moyens de code de programme informatique pour commander un processeur dans un terminal de communication (2), lequel terminal de communication (2) communique par le biais d'un réseau de télécommunication (3), de telle sorte qu'il définit en fonction de la situation le degré de sécurité de fonctions de cryptographie (11, 23) qui sont utilisées dans le terminal de communication (2) en prenant ici en compte de manière sécurisée par le biais du réseau de télécommunication (3) des paramètres indiquant la situation provenant d'une source sécurisée (3, 4), **caractérisé en ce que** le programme informatique comprend des tableaux ou des instructions de programme correspondantes à l'aide desquels sont affectés les paramètres de sécurité correspondant aux paramètres indiquant la situation actuellement pris en compte, lesquels paramètres de sécurité comprennent la longueur des clés cryptographiques et/ou la désignation des algorithmes cryptographiques qui seront utilisés par lesdites fonctions de cryptographie (11, 23) et qui déterminent le niveau du degré de sécurité de ces dites fonctions de cryptographie (11, 23).
